# EUROPEAN PATENT APPLICATION

(11) **EP 4 686 266 A2**
(43) Date of publication of application: **28.01.2026**
(21) Application number: 25212375.7
(22) Date of filing: 05.10.2022
(51) Int. Cl.: H04W 48/12

(54) **METHOD AND APPARATUS FOR SUPPORTING ENHANCED BANDWIDTH PART (BWP) OPERATION FOR REDUCED CAPABILITY (REDCAP) USER EQUIPMENT (UE)**

(30) Priority: 14.10.2021 US 202163255449 P; 14.09.2022 US 202217945030
(62) Divisional of application: 22199723.2
(71) Applicant: MediaTek Singapore Pte Ltd, Singapore 138628 (SG)
(72) Inventor: AL-IMARI, Mohammed S Aleabe, Cambourne, Cambridge (GB); NEMETH, Jozsef Gabor, Cambourne, Cambridge (GB)
(74) Representative: Hoefer & Partner Patentanwälte mbB

(57) **Abstract**

Various solutions for supporting enhanced bandwidth part, BWP, operation for reduced capability, RedCap, user equipment, UE, are described. An apparatus may receive system information from a network node (410). The system information includes configuration of a common control resource set, CORESET, that is not contained in a bandwidth of a CORESET with an identifier, ID, of zero. The apparatus may monitor a common search space, CSS, with the configuration of the common CORESET that is not contained in the bandwidth of the CORESET with the ID of zero (420).

## Description

### CROSS REFERENCE TO RELATED PATENT APPLICATION(S)

The present disclosure claims the priority benefit of U.S. Provisional Patent Application No. 63/255,449, filed on 14 October 2021. The contents of aforementioned application are herein incorporated by reference in their entirety.

### TECHNICAL FIELD

The present disclosure is generally related to mobile communications and, more particularly, to supporting enhanced bandwidth part (BWP) operation for reduced capability (RedCap) user equipment (UE).

### BACKGROUND

Unless otherwise indicated herein, approaches described in this section are not prior art to the claims listed below and are not admitted as prior art by inclusion in this section.

In 3^{rd} Generation Partnership Project (3GPP) Release 17, a new type of UEs called reduced capability (RedCap) UEs (also known as NR-Light UEs) is introduced. Generally, the RedCap UEs are associated with lower communicative capacity when compared to typical UEs (or called non-RedCap UEs), such as high-end UEs supporting enhanced mobile broadband (eMBB) and/or ultra-reliable low latency communications (URLLC) services. For example, the RedCap UEs may be limited in terms of maximum bandwidth (e.g., 20 MHz in Frequency Range 1 (FR1), 100 MHz in FR2, etc.), maximum transmission power (e.g., 20 dBm, 14 dBm, etc.), number of receive antennas (e.g., 1 receive antenna, 2 receive antennas, etc.), and so on. The reduced complexity contributes to more cost-efficient NR-Light devices, longer battery life due to lower power consumption, and a smaller device footprint, which enables newer designs for a broad range of use cases, such as industrial sensors, video surveillance, and wearables.

To support coexistence of RedCap UEs and non-RedCap UEs, a separate downlink (DL) initial bandwidth part (iBWP) for RedCap UEs may be required, such that a common search space (CSS) and common control resource set (CORESET) may be configured on the separate DL iBWP for the RedCap UEs to perform physical downlink control channel (PDCCH) monitoring. However, in the current 3GPP specifications for 5G New Radio (NR), there may exist restriction(s) that contradicts with the need of a separate DL iBWP for RedCap UEs. Therefore, it is desirable to adapt the 3GPP specifications for 5G NR to fit with the need of a separate DL iBWP for RedCap UEs.

Moreover, in the current 5G NR framework, a UE monitors paging and random access response (RAR) on the same DL iBWP. If a 5G network configures the UE with an uplink (UL) iBWP that is not aligned with the configured DL iBWP in the frequency domain (e.g., in terms of the center frequency), the UE will have to re-tune between the UL iBWP and the DL iBWP, causing extra processing time and power consumption. Therefore, it is desirable to avoid the retuning in the BWP operation for RedCap UEs.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to propose solutions or schemes that address the aforementioned issues pertaining to supporting enhanced bandwidth part (BWP) operation for reduced capability (RedCap) user equipment (UE). Methods and an apparatus according to the invention are defined in the independent claims. The dependent claims define preferred embodiments thereof.

In one aspect, a method may involve an apparatus receiving system information from a network node, wherein the system information comprises configuration of a common control resource set (CORESET) that is not contained in a bandwidth of a CORESET with an identifier (ID) of zero. The method may also involve the apparatus monitoring a common search space (CSS) with the configuration of the common CORESET that is not contained in the bandwidth of the CORESET with the ID of zero.

In one aspect, an apparatus may comprise a transceiver which, during operation, wirelessly communicates with at least one network node of a wireless network. The apparatus may also comprise a processor communicatively coupled to the transceiver. The processor, during operation, may perform operations comprising receiving, via the transceiver, system information from a network node, wherein the system information comprises configuration of a CORESET that is not contained in a bandwidth of a CORESET with an ID of zero. The processor may also perform operations comprising monitoring, via the transceiver, a CSS with the configuration of the common CORESET that is not contained in the bandwidth of the CORESET with the ID of zero.

In one aspect, a method may involve an apparatus monitoring a paging message from a network node on a first downlink (DL) initial BWP (iBWP). The method may also involve the apparatus monitoring a random access response (RAR) message from the network node on a second DL iBWP.

It is noteworthy that, although description provided herein may be in the context of certain radio access technologies, networks and network topologies such as Long-Term Evolution (LTE), LTE-Advanced, LTE-Advanced Pro, 5th Generation (5G), New Radio (NR), Internet-of-Things (IoT) and Narrow Band Internet of Things (NB-loT), Industrial Internet of Things (lloT), and 6th Generation (6G), the proposed concepts, schemes and any variation(s)/derivative(s) thereof may be implemented in, for and by other types of radio access technologies, networks and network topologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram depicting an example scenario under schemes in accordance with implementations of the present disclosure.
FIG. 2 is a diagram depicting an example scenario under schemes in accordance with implementations of the present disclosure.
FIG. 3 is a block diagram of an example communication system in accordance with an implementation of the present disclosure.
FIG. 4 is a flowchart of an example process in accordance with an implementation of the present disclosure.
FIG. 5 is a flowchart of an example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to supporting enhanced bandwidth part (BWP) operation for reduced capability (RedCap) user equipment (UE). According to the present disclosure, a number of possible solutions may be implemented separately or jointly. That is, although these possible solutions may be described below separately, two or more of these possible solutions may be implemented in one combination or another.

In 3^{rd} Generation Partnership Project (3GPP) Release 17, a new type of UEs called RedCap UEs (also known as NR-Light UEs) is introduced. Generally, the RedCap UEs are associated with lower communicative capacity when compared to typical UEs (or called non-RedCap UEs), such as high end UEs supporting enhanced mobile broadband (eMBB) and/or ultra-reliable low latency communications (URLLC) services. To support coexistence of RedCap UEs and non-RedCap UEs, a separate downlink (DL) initial BWP (iBWP) for RedCap UEs may be required, such that a common search space (CSS) and common control resource set (CORESET) may be configured on the separate DL iBWP for the RedCap UEs to perform physical downlink control channel (PDCCH) monitoring. However, in the current 3GPP specifications for 5G New Radio (NR), there is a restriction that if a 5G network configures the common CORESET in system information block 1 (SIB1), the common CORESET must be contained in the bandwidth of CORESET#0. With such restriction, it will not be possible to configure, via the SIB1, the common CORESET in a separate DL iBWP for the RedCap UEs (because the separate DL iBWP doesn't contain CORESET#0). Therefore, it is desirable to adapt the 3GPP specifications for 5G NR to fit with the need of a separate DL iBWP for RedCap UEs.

Moreover, in the current 5G NR framework, a UE monitors paging and random access response (RAR) on the same DL iBWP. If a 5G network configures the UE with an uplink (UL) iBWP that is not aligned with the configured DL iBWP in the frequency domain (e.g., in terms of the center frequency), the UE will have to re-tune between the UL iBWP and the DL iBWP, causing extra processing time and power consumption. Therefore, it is desirable to avoid the retuning in the BWP operation for RedCap UEs.

In view of the above, the present disclosure proposes a number of schemes pertaining to supporting enhanced BWP operation for RedCap UE. According to some schemes of the present disclosure, a RedCap UE may receive, via system information (e.g., SIB1), configuration of the common CORESET that is not contained in the bandwidth of CORESET#0 (i.e., the CORESET with an identifier (ID) of zero), such that the RedCap UE may monitor the CSS with the configuration of the common CORESET that is not contained in the bandwidth of CORESET#0. That is, it is allowed to configure, via SIB1, the common CORESET that is not contained in the bandwidth of CORESET#0 to RedCap UEs. Moreover, according to some schemes of the present disclosure, a RedCap UE may monitor a paging message on a first DL iBWP (e.g., the master information block (MIB)-BWP that contains CORESET#0), while monitoring a random access response (RAR) message on a second DL iBWP (e.g., a DL iBWP that does not contain CORESET#0), in a case that the uplink (UL) iBWP and the DL iBWP configured for the RedCap UE have the same center frequency (i.e., the UL and DL iBWPs configured for the RedCap UE are aligned in the frequency domain). By applying the schemes of the present disclosure, coexistence of RedCap UEs and non-RedCap UEs can be realized by providing a separate DL iBWP for RedCap UEs.

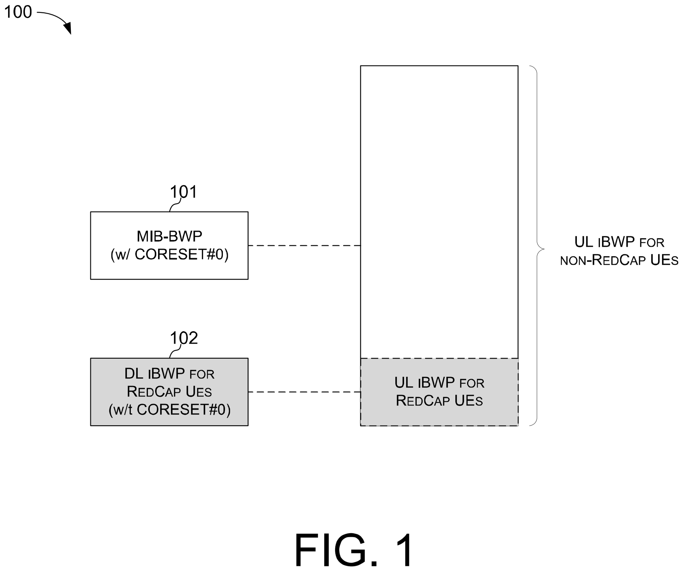

FIG. 1 illustrates an example scenario 100 under schemes in accordance with implementations of the present disclosure. Scenario 100 illustrates an example of BWP configuration for coexistence of RedCap UEs and non-RedCap UEs. The BWP configuration includes a DL iBWP that contains CORESET#0 (denoted as MIB-BWP 101) which may be used for both RedCap UEs and non-RedCap UEs, and the MIB-BWP 101 and the UL iBWP for non-RedCap UEs have the same center frequency. In addition, a separate DL iBWP 102 that does not contain CORESET#0 is configured for RedCap UEs, and the DL iBWP 102 and the UL iBWP for RedCap UEs have the same center frequency (i.e., the DL iBWP 102 and the UL iBWP for RedCap UEs are aligned in the frequency domain).

In one novel aspect, scenario 100 may involve a RedCap UE and a network node, which may be a part of a wireless communication network (e.g., an LTE network, a 5G network, an NR network, an loT network or an NB-loT network), and the RedCap UE may receive, via system information (e.g., SIB1), configuration of the common CORESET that is not contained in the bandwidth of CORESET#0, such that the RedCap UE may monitor the CSS with the configuration of the common CORESET that is not contained in the bandwidth of CORESET#0.

In some implementations, a RedCap UE may monitor a paging message from a network node on the MIB-BWP 101, and may monitor an RAR message from the network node on the separate DL initial BWP 102.

In some implementations, a RedCap UE may monitor a paging message and remaining minimum system information (RMSI) or other system information (OSI) from a network node on the MIB-BWP 101, and may monitor an RAR message from the network node on the separate DL initial BWP 102.

In some implementations, a RedCap UE may monitor a paging message and RMSI from a network node on the MIB-BWP 101, and may monitor an RAR message and OSI from the network node on the separate DL initial BWP 102.

In some implementations, a RedCap UE may monitor a paging message from a network node on the MIB-BWP 101 when the RedCap UE is in a radio resource control (RRC) idle mode.

In some implementations, a RedCap UE may be configured with a CSS for random access (e.g., a type1 physical downlink control channel (PDCCH) CSS) on the separate DL initial BWP 102.

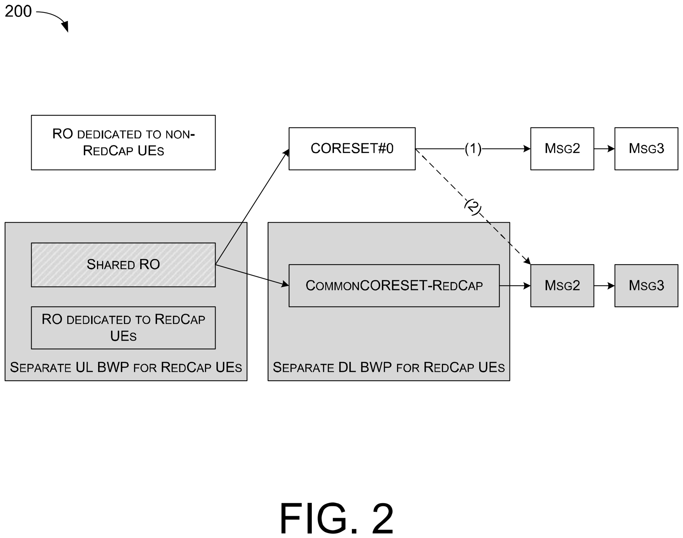

FIG. 2 illustrates an example scenario 200 under schemes in accordance with implementations of the present disclosure. Scenario 200 illustrates an example of random access channel (RACH) occasion (RO) configuration for coexistence of RedCap UEs and non-RedCap UEs. As shown in scenario 200, three types of RO are configured, including an RO dedicated for non-RedCap UEs, a shared RO (i.e., shared by both non-RedCap UEs and RedCap UEs), and an RO dedicated for RedCap UEs. The RedCap UE and the non-RedCap UEs monitors PDCCH for Msg2 and Msg4 in different CORESETs (i.e., CORESET#0 and commonCORESET-RedCap). For the shared RO, a network node (e.g., a gNB) may transmit PDCCH for Msg2 on both CORESETs simultaneously. The network node may schedule separate Msg2's for RedCap UEs and non-RedCap UEs, which schedule separate Msg3's, allowing early UE identification.

In some implementations, the network node may schedule separate Msg2's for RedCap UEs and non-RedCap UEs in response to physical random access channel (PRACH) received on the shared RO.

In some implementations, the network node may schedule separate Msg2/Msg3 for RedCap UEs and non-RedCap UEs in response to PRACH received on the shared RO.

### Illustrative Implementations

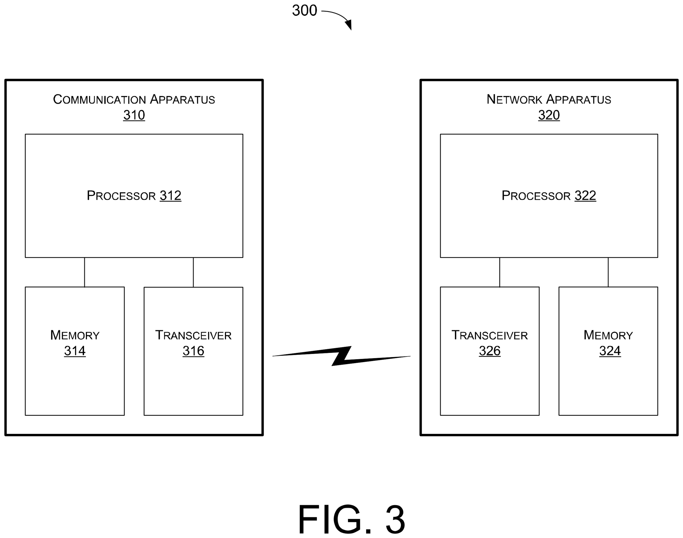

FIG. 3 illustrates an example communication system 300 having an example communication apparatus 310 and an example network apparatus 320 in accordance with an implementation of the present disclosure. Each of communication apparatus 310 and network apparatus 320 may perform various functions to implement schemes, techniques, processes and methods described herein pertaining to supporting enhanced BWP operation for RedCap UE, including scenarios/schemes described above as well as processes 400 and 500 described below.

Communication apparatus 310 may be a part of an electronic apparatus, which may be a UE (e.g., RedCap UE) such as a portable or mobile apparatus, a wearable apparatus, a wireless communication apparatus or a computing apparatus. For instance, communication apparatus 310 may be implemented in a smartphone, a smartwatch, a personal digital assistant, a digital camera, or a computing equipment such as a tablet computer, a laptop computer or a notebook computer. Communication apparatus 310 may also be a part of a machine type apparatus, which may be an loT, NB-loT, or IIoT apparatus such as an immobile or a stationary apparatus, a home apparatus, a wire communication apparatus or a computing apparatus. For instance, communication apparatus 310 may be implemented in a smart thermostat, a smart fridge, a smart door lock, a wireless speaker or a home control center. Alternatively, communication apparatus 310 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. Communication apparatus 310 may include at least some of those components shown in FIG. 3 such as a processor 312, for example. Communication apparatus 310 may further include one or more other components not pertinent to the proposed scheme of the present disclosure (e.g., internal power supply, display device and/or user interface device), and, thus, such component(s) of communication apparatus 310 are neither shown in FIG. 3 nor described below in the interest of simplicity and brevity.

Network apparatus 320 may be a part of an electronic apparatus, which may be a network node such as a base station, a small cell, a router or a gateway. For instance, network apparatus 320 may be implemented in an eNodeB in an LTE, LTE-Advanced or LTE-Advanced Pro network or in a gNB in a 5G, NR, loT, NB-loT or IIoT network. Alternatively, network apparatus 320 may be implemented in the form of one or more IC chips such as, for example and without limitation, one or more single-core processors, one or more multi-core processors, or one or more RISC or CISC processors. Network apparatus 320 may include at least some of those components shown in FIG. 3 such as a processor 322, for example. Network apparatus 320 may further include one or more other components not pertinent to the proposed scheme of the present disclosure (e.g., internal power supply, display device and/or user interface device), and, thus, such component(s) of network apparatus 320 are neither shown in FIG. 3 nor described below in the interest of simplicity and brevity.

In one aspect, each of processor 312 and processor 322 may be implemented in the form of one or more single-core processors, one or more multi-core processors, or one or more CISC processors. That is, even though a singular term "a processor" is used herein to refer to processor 312 and processor 322, each of processor 312 and processor 322 may include multiple processors in some implementations and a single processor in other implementations in accordance with the present disclosure. In another aspect, each of processor 312 and processor 322 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 312 and processor 322 is a special-purpose machine specifically designed, arranged and configured to perform specific tasks including autonomous reliability enhancements in a device (e.g., as represented by communication apparatus 310) and a network (e.g., as represented by network apparatus 320) in accordance with various implementations of the present disclosure.

In some implementations, communication apparatus 310 may also include a transceiver 316 coupled to processor 312 and capable of wirelessly transmitting and receiving data. In some implementations, communication apparatus 310 may further include a memory 314 coupled to processor 312 and capable of being accessed by processor 312 and storing data therein. In some implementations, network apparatus 320 may also include a transceiver 326 coupled to processor 322 and capable of wirelessly transmitting and receiving data. In some implementations, network apparatus 320 may further include a memory 324 coupled to processor 322 and capable of being accessed by processor 322 and storing data therein. Accordingly, communication apparatus 310 and network apparatus 320 may wirelessly communicate with each other via transceiver 316 and transceiver 326, respectively. To aid better understanding, the following description of the operations, functionalities and capabilities of each of communication apparatus 310 and network apparatus 320 is provided in the context of a mobile communication environment in which communication apparatus 310 is implemented in or as a communication apparatus or a UE and network apparatus 320 is implemented in or as a network node of a communication network.

In some implementations, processor 312 may receive, via transceiver 316, system information from the network apparatus 320, wherein the system information comprises configuration of a common CORESET that is not contained in a bandwidth of a CORESET with an ID of zero. Then, processor 312 may monitor, via transceiver 316, a CSS with the configuration of the common CORESET that is not contained in the bandwidth of the CORESET with the ID of zero.

In some implementations, processor 312 may monitor, via transceiver 316, a paging message from the network apparatus 320 on a first DL iBWP. Then, processor 312 may monitor, via transceiver 316, an RAR message from the network apparatus 320 on a second DL iBWP.

### Illustrative Processes

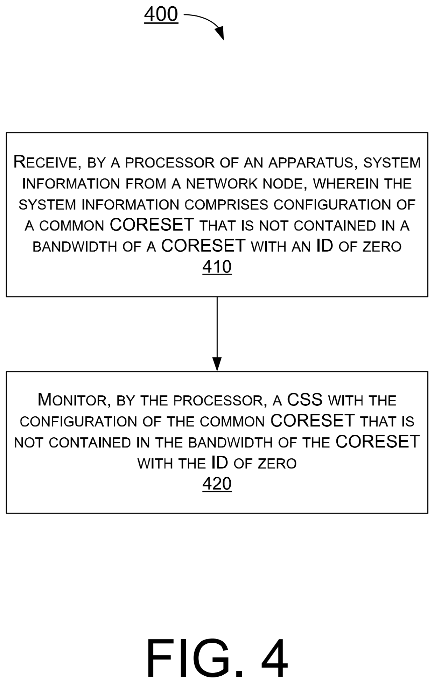

FIG. 4 illustrates an example process 400 in accordance with an implementation of the present disclosure. Process 400 may be an example implementation of above scenarios/schemes, whether partially or completely, with respect to supporting enhanced BWP operation for RedCap UE. Process 400 may represent an aspect of implementation of features of communication apparatus 310. Process 400 may include one or more operations, actions, or functions as illustrated by one or more of blocks 410 and 420. Although illustrated as discrete blocks, various blocks of process 400 may be divided into additional blocks, combined into fewer blocks, or eliminated, depending on the desired implementation. Moreover, the blocks of process 400 may be executed in the order shown in FIG. 4 or, alternatively, in a different order. Process 400 may be implemented by communication apparatus 310 or any suitable UE or machine type devices. Solely for illustrative purposes and without limitation, process 400 is described below in the context of communication apparatus 310. Process 400 may begin at block 410.

At 410, process 400 may involve processor 312 of communication apparatus 310 receiving, via transceiver 316, system information from the network apparatus 320, wherein the system information comprises configuration of a common CORESET that is not contained in a bandwidth of a CORESET with an ID of zero. Process 400 may proceed from 410 to 420.

At 420, process 400 may involve processor 312 monitoring, via transceiver 316, a CSS with the configuration of the common CORESET that is not contained in the bandwidth of the CORESET with the ID of zero.

In some implementations, communication apparatus 310 may be a RedCap UE.

In some implementations, the system information is a SIB1.

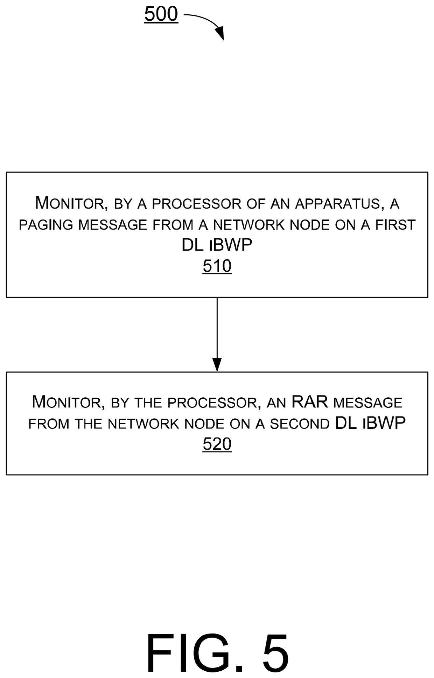

FIG. 5 illustrates an example process 500 in accordance with an implementation of the present disclosure. Process 500 may be an example implementation of above scenarios/schemes, whether partially or completely, with respect to supporting enhanced BWP operation for RedCap UE. Process 500 may represent an aspect of implementation of features of communication apparatus 310. Process 500 may include one or more operations, actions, or functions as illustrated by one or more of blocks 510 and 520. Although illustrated as discrete blocks, various blocks of process 500 may be divided into additional blocks, combined into fewer blocks, or eliminated, depending on the desired implementation. Moreover, the blocks of process 500 may be executed in the order shown in FIG. 5 or, alternatively, in a different order. Process 500 may be implemented by communication apparatus 310 or any suitable UE or machine type devices. Solely for illustrative purposes and without limitation, process 500 is described below in the context of communication apparatus 310. Process 500 may begin at block 510.

At 510, process 500 may involve processor 312 of communication apparatus 310 monitoring, via transceiver 316, a paging message from the network apparatus 320 on a first DL iBWP. Process 500 may proceed from 510 to 520.

At 520, process 500 may involve processor 312 monitoring, via transceiver 316, an RAR message from the network apparatus 320 on a second DL iBWP.

In some implementations, communication apparatus 310 may be a RedCap UE.

In some implementations, the monitoring of the paging message may be performed when communication apparatus 310 is in an RRC idle mode.

In some implementations, the first DL iBWP may contain a CORESET with an ID of zero.

In some implementations, the second DL iBWP may not contain a CORESET with an ID of zero.

In some implementations, communication apparatus 310 may be configured with a CSS for random access (e.g., type1 PDCCH CSS) on the second DL iBWP.

In some implementations, communication apparatus 310 may be configured with an UL iBWP, and the second DL iBWP and the UL iBWP have the same center frequency.

In some implementations, process 500 may further involve processor 312 monitoring, via transceiver 316, RMSI or OSI from the network apparatus 320 on the first DL iBWP.

In some implementations, process 500 may further involve processor 312 monitoring, via transceiver 316, RMSI from the network apparatus 320 on the first DL iBWP, and monitoring, via transceiver 316, OSI from the network apparatus 320 on the second DL iBWP.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

The invention can also be described based on the following clauses:
**1.** A method, comprising:
   receiving, by a processor of an apparatus, system information from a network node, wherein the system information comprises configuration of a common control resource set, in the following also referred to as CORESET, that is not contained in a bandwidth of a CORESET with an identifier, in the following also referred to as ID, of zero (410); and
   monitoring, by the processor, a common search space, in the following also referred to as CSS, with the configuration of the common CORESET that is not contained in the bandwidth of the CORESET with the ID of zero (420).
**2.** An apparatus (310), comprising:
   a transceiver (316) which, during operation, wirelessly communicates with at least one network node of a wireless network; and
   a processor (312) communicatively coupled to the transceiver (316) such that, during operation, the processor (312) performs operations comprising:
      receiving, via the transceiver (316), system information from a network node, wherein the system information comprises configuration of a common control resource set, in the following also referred to as CORESET, that is not contained in a bandwidth of a CORESET with an identifier, in the following also referred to as ID, of zero; and
      monitoring, via the transceiver (316), a common search space, in the following also referred to as CSS, with the configuration of the
      common CORESET that is not contained in the bandwidth of the CORESET with the ID of zero.
**3.** The method of clause 1, or the apparatus (310) of clause 2, wherein the apparatus (310) is a reduced capability user equipment, in the following also referred to as RedCap UE.
**4.** The method of clause 1 or 3, or the apparatus of clause 2 or 3, wherein the system information is system information block 1, in the following also referred to as SIB1.
**5.** A method, comprising:
   monitoring, by a processor of an apparatus, a paging message from a network node on a first downlink, in the following also referred to as DL, initial bandwidth part, in the following also referred to as iBWP, (510); and
   monitoring, by the processor, a random access response, in the following also referred to as RAR, message from the network node on a second DL iBWP (520).
**6.** The method of clause 5, wherein the apparatus is a reduced capability user equipment, in the following also referred to as RedCap UE.
**7.** The method of clause 5 or 6, wherein the monitoring of the paging message is performed when the apparatus is in a radio resource control, in the following also referred to as RRC, idle mode.
**8.** The method of any one of clauses 5 to 7, wherein the first DL iBWP contains a control resource set, in the following also referred to as CORESET, with an identifier, in the following also referred to as ID, of zero.
**9.** The method of any one of clauses 5 to 8, wherein the second DL iBWP does not contain a CORESET with an ID of zero.
**10.** The method of any one of clauses 5 to 9, wherein the UE is configured with a common search space, in the following also referred to as CSS, for random access on the second DL iBWP.
**11.** The method of clause 10, wherein the CSS is a type1 physical downlink control channel, in the following also referred to as PDCCH, CSS.
**12.** The method of any one of clauses 5 to 11, wherein the apparatus is configured with an uplink, in the following also referred to as UL, iBWP, and the second DL iBWP and the UL iBWP have a same center frequency.
**13.** The method of any one of clauses 5 to 12, further comprising:
   monitoring, by the processor, remaining minimum system information, in the following also referred to as RMSI, or other system information, in the following also referred to as OSI, from the network node on the first DL iBWP.
**14.** The method of any one of clauses 5 to 13, further comprising:
   monitoring, by the processor, RMSI from the network node on the first DL iBWP; and
   monitoring, by the processor, OSI from the network node on the second DL iBWP.

## Claims

1. A method, comprising:
monitoring, by a processor of an apparatus, a paging message from a network node on a first downlink, in the following also referred to as DL, initial bandwidth part, in the following also referred to as iBWP, (510); and
monitoring, by the processor, a random access response, in the following also referred to as RAR, message from the network node on a second DL iBWP (520);
wherein the apparatus is a reduced capability user equipment, in the following also referred to as RedCap UE;
wherein the apparatus is configured with an uplink, in the following also referred to as UL, iBWP, and the second DL iBWP and the UL iBWP have a same center frequency;
wherein the method further comprises:
monitoring, by the processor, remaining minimum system information, in the following also referred to as RMSI, from the network node on the first DL iBWP.

2. A method, comprising:
monitoring, by a processor of an apparatus, a paging message from a network node on a first downlink, in the following also referred to as DL, initial bandwidth part, in the following also referred to as iBWP, (510);
monitoring, by the processor, a random access response, in the following also referred to as RAR, message from the network node on a second DL iBWP (520); and
monitoring, by the processor, remaining minimum system information, in the following also referred to as RMSI, or other system information, in the following also referred to as OSI, from the network node on the first DL iBWP.

3. The method of Claim 2, wherein the apparatus is a reduced capability user equipment, in the following also referred to as RedCap UE.

4. The method of any one of Claims 1 to 3, wherein the monitoring of the paging message is performed when the apparatus is in a radio resource control, in the following also referred to as RRC, idle mode.

5. The method of any one of Claims 1 to 4, wherein the first DL iBWP contains a control resource set, in the following also referred to as CORESET, with an identifier, in the following also referred to as ID, of zero.

6. The method of any one of Claims 1 to 5, wherein the second DL iBWP does not contain a CORESET with an ID of zero.

7. The method of any one of Claims 1 to 6, wherein the UE is configured with a common search space, in the following also referred to as CSS, for random access on the second DL iBWP.

8. The method of Claim 7, wherein the CSS is a type1 physical downlink control channel, in the following also referred to as PDCCH, CSS.

9. The method of Claim 2 or 3 or any one of Claims 4 to 8 being directly or indirectly dependent on Claim 2 or 3, wherein the apparatus is configured with an uplink, in the following also referred to as UL, iBWP, and the second DL iBWP and the UL iBWP have a same center frequency.

10. The method of Claim 1 or any one of Claims 4 to 8 being directly or indirectly dependent on Claim 1, further comprising:
monitoring, by the processor, OSI from the network node on the second DL iBWP.

11. The method of Claim 2, 3 or 9 or any one of Claims 4 to 8 being directly or indirectly dependent on Claim 2 or 3, further comprising:
monitoring, by the processor, RMSI from the network node on the first DL iBWP; and
monitoring, by the processor, OSI from the network node on the second DL iBWP.
